# EUROPEAN PATENT APPLICATION

(11) **EP 1 357 713 A1**
(43) Date of publication of application: **29.10.2003**
(21) Application number: 03252653.5
(22) Date of filing: 25.04.2003
(51) Int. Cl.: H04L 12/56

(54) **Wireless data collecting system and wireless data relay apparatus**

(30) Priority: 26.04.2002 JP 2002125528
(71) Applicant: Kabushiki Kaisha Kobe Seiko Sho (Kobe Steel, Ltd.), Kobe-shi, Hyogo 651-8585 (JP); KOBELCO CONSTRUCTION MACHINERY CO., LTD., Hiroshima-shi, Hiroshima 731-0138 (JP)
(72) Inventor: Takahashi, Enji, c/o Kobe Corporate Research Lab., Nishi-ku, Kobe-shi, Hyogo 651-2271 (JP); Shirasaka, Takanari, Kobe Corporate Research Lab., Nishi-ku, Kobe-shi, Hyogo 651-2271 (JP); Narazaki, Hiroshi, Kobe Corporate Research Lab., Nishi-ku, Kobe-shi, Hyogo 651-2271 (JP); Kinugawa, Hideki, Kobe Corporate Research Lab., Nishi-ku, Kobe-shi, Hyogo 651-2271 (JP)
(74) Representative: Brookes Batchellor

(57) **Abstract**

A portable wireless data relay apparatus (3) comprises a terminal communication unit for receiving data transmitted from wireless terminals (1), a data memorizing unit for memorizing the received data, a base station communication unit for wirelessly transmitting the memorized data to the base station apparatus (2), and a communication switching unit for switching between the wireless communication conducted by the wireless communication unit and that by the base station communication unit. The wireless data relay apparatus (3) uses the base station communication unit to act as the wireless terminal, and to transmit the memorized data to the base station apparatus (2) in a communication area with the base station apparatus (2) after it uses the terminal communication unit to act as the base station apparatus, and to receive and memorize data from the wireless terminal (1). A stable wireless communication without multiple wireless communication bands or communication protocols is realized to apply to a traveling machine.

## Description

### BACKGROUND OF THE INVENTION

### 1. Field of the Invention

The present invention relates to a wireless data collecting system providing stable communication without receiving influence such as the communication distance, the directivity of a radio antenna, and the existence of an obstacle when a predetermined base station apparatus wirelessly collects different types of data from a wireless terminal.

### 2. Description of the Related Art

Recently, for managing maintenance and security of a movable machine such as a self-traveling work machine including a construction machine and an agricultural machine, and a portable construction machine such as a generator and a compressor, it is desired to provide a wireless data collecting system for collecting data relating to its operation status (such as on/off of the engine, the existence of the fuel, the hydraulic pressure, and the coolant temperature) at a predetermined base station through wireless communication. For this type of the wireless data collecting system, since a stable wireless communication may not be realized due to problems such as the communication distance from a wireless terminal provided on the movable machine and the base station, the directivity of a radio antenna, an existence/non-existence of an obstacle, it is necessary to solve these problems.

Conventionally, as a system for wirelessly correcting data while avoiding an obstacle, there is a system which collects performance data and the like in terms of inventory management using a portable wireless terminal in a plant and a logistic warehouse. For example, Japanese Patent Application Publication H09-93177 shows a system where predetermined relay stations are disposed at multiple positions covering an entire activity field of an operator carrying a wireless terminal, and a base station (a fixed data managing apparatus) wirelessly collects data via the relay stations. Consequently, if at least either one of the multiple relay stations is arranged so as to avoid a wall of a building and the like which becomes an obstacle against the wireless communication, the data are surely collected from the wireless terminal to the base station.

However, with the technology in the above publication, since the data from the wireless terminal always reaches to the base station by way of the relay station, it is necessary to provide communication between the wireless terminal and the relay station and that between the relay station and the base station individually with a wireless communication band or a communication protocol. There are such problems that the system becomes complicated such that it is necessary to provide communication means handling multiple types of communication methods on the relay station, and that an additional wireless communication band is used compared with a system where data are directly transmitted from the wireless terminal to the base station.

Also, when data are collected from a traveling machine, since the extent of the travel of the machine (namely the wireless terminal) is not determined, and the machine itself may act as an obstacle in the directivity range of an antenna of the wireless terminal, it is not possible to provide a relay station in a proper location in advance. Thus, there is such a problem that the technology in the publication described above is not available.

### SUMMARY OF THE INVENTION

The present invention is devised in view of the foregoing, and the objective thereof is to provide a wireless data collecting system, and a wireless data relay apparatus which easily realize a stable wireless communication without using multiple wireless communication bands or communication protocols, and is applicable to a case where the travel extent of the wireless terminal is not determined.

To attain the objective above, the present invention is a wireless data collecting system comprising a wireless terminal for wirelessly transmitting predetermined data, a base station apparatus for receiving the predetermined data wirelessly transmitted from said wireless terminal and a wireless data relay apparatus. The wireless data relay apparatus comprises terminal communication means for receiving said data transmitted from said wireless terminal in a communication method which is the same as that of said base station apparatus, data memorizing means for memorizing the data received by said terminal communication means and base station communication means for transmitting the memorized data in said data memorizing means to said base station apparatus in a communication method which is the same as that of said wireless terminal.

With this constitution, the wireless data relay apparatus relays data communication such that after it first receives and memorizes data from the wireless terminal in place of the base station apparatus, it transmits the data to the base station apparatus in place of the wireless terminal. As a result, for example, even if the direct communication between the base station apparatus and the wireless terminal is not available due to a problem such as the communication distance, it is possible to realize a system which relays data communication without adding a new communication method (a wireless communication band or a communication protocol). Namely, it is possible to easily build a relay system for wireless data by just adding the wireless data relay apparatus without changing the constitution of a simple data collecting system where the wireless terminal and the base station apparatus directly communicate wirelessly without a relay.

The wireless data relay apparatus may further comprise communication switching means for switching between the wireless communication conducted by the terminal communication means and that by the base station communication means.

With this constitution, since the communication with the wireless terminal and the communication with the base station apparatus are not conducted simultaneously, a constitution where single set of a radio apparatus such as a radio antenna is shared between the communication with the wireless terminal and the communication with the base station apparatus is also possible. As the communication switching means, both means of manual switching and means of automatic switching depending on the communication condition are possible.

When the wireless data relay apparatus further comprises an antenna and a battery, since it is portable possible to freely bring it to a location where the communication with the wireless terminal is possible, the data can be relayed even if the travel extent of the wireless terminal is not determined. Also, since it is not necessary to place the wireless data relay apparatus at a location where the communication with the wireless terminal and the communication with the base station apparatus are simultaneously available, it is possible to transmit data which have been collected from the wireless terminal and memorized away from office to the base station apparatus after returning to office, for example.

Also, it is possible to recognize the present invention as a wireless data relay apparatus constituting the wireless data collecting system.

### BRIEF DESCRIPTION OF THE DRAWINGS

Fig. 1 is a block diagram showing a schematic constitution of a wireless data collecting system X relating to an embodiment of the present invention.
Fig. 2 is a block diagram showing a schematic constitution of individual apparatuses constituting the wireless data collecting system X relating to the embodiment of the present invention.
Fig. 3 is a time chart showing communication steps of the wireless data collecting system X relating to the embodiment of the present invention.

### DESCRIPTION OF THE PREFERRED EMBODIMENTS

Referring to appended drawings, the following section describes an embodiment of the present invention for comprehending the present invention. The following embodiment is an example of embodying the present invention, and it in nature does not limit the technical scope of the present invention.

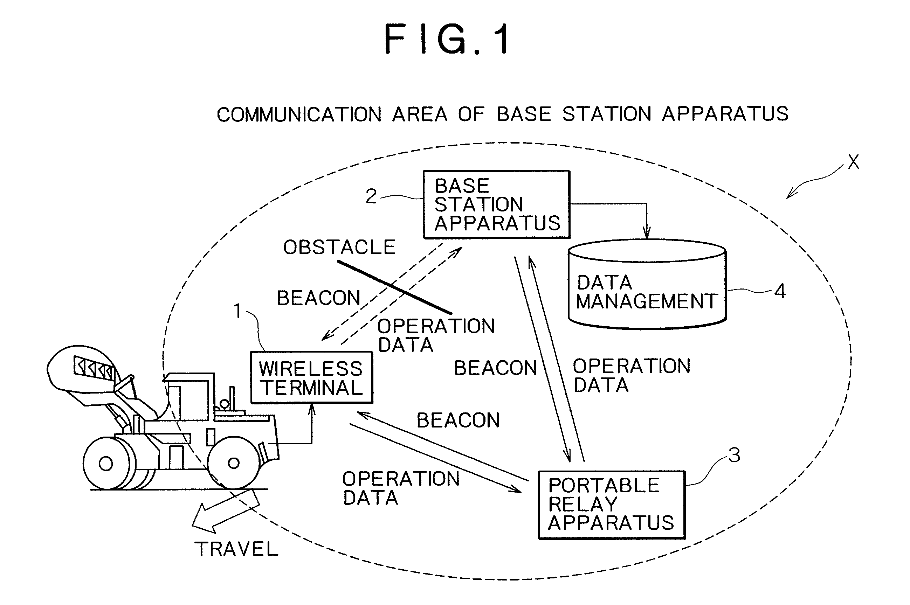

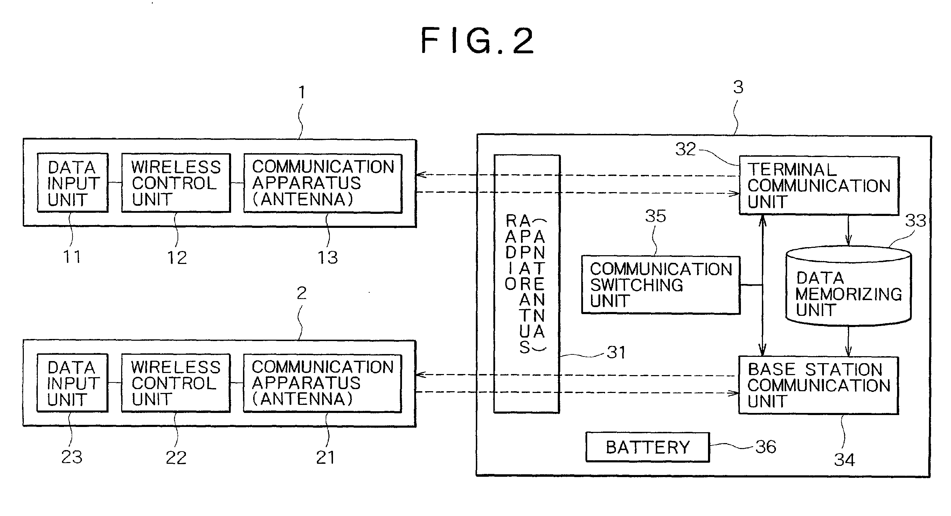

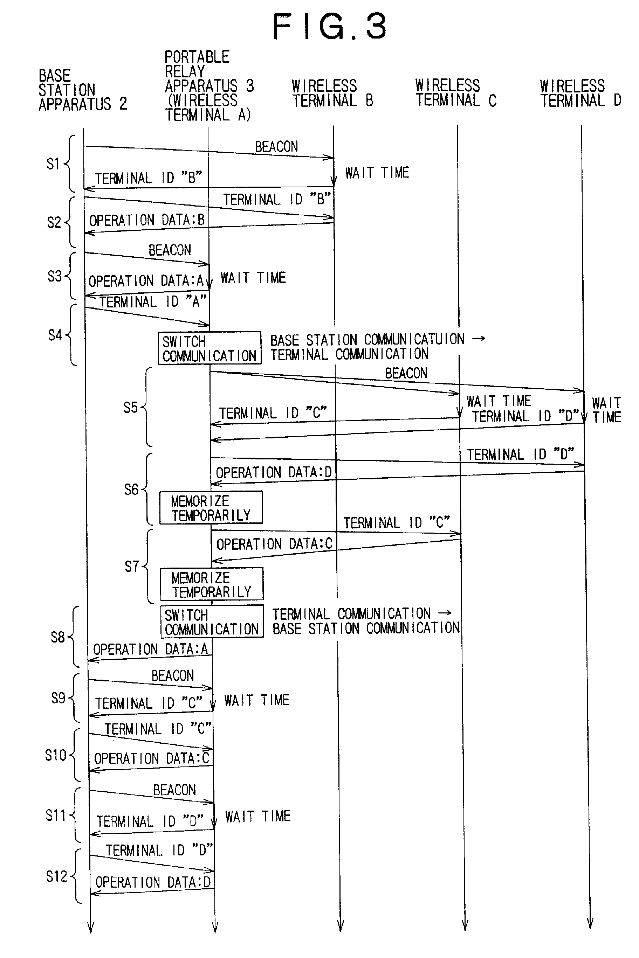

Here, Fig. 1 is a block diagram showing a schematic constitution of a wireless data collecting system X according to the embodiment of the present invention, Fig. 2 is a block diagram showing a schematic constitution of individual apparatuses constituting the wireless data collecting system X according to the embodiment of the present invention, and Fig. 3 is a time chart showing communication steps of the wireless data collecting system according to the embodiment of the present invention.

The wireless data collecting system X according to the present embodiment is a system where operation data (such as ON/OFF of the engine, the existence of the fuel, the hydraulic pressure, and the coolant temperature) on a traveling machine such as a construction machine are wireless collected from the traveling machine to a base station provided at a predetermined location.

First, referring to Fig. 1, description is provided for the constitution of the present wireless data collecting system X.

As shown in Fig. 1, the wireless data collecting system X includes a wireless terminal 1, a base station apparatus 2 and a portable relay apparatus 3. The wireless terminal 1 is provided on a traveling machine such as a construction machine, and wirelessly transmits the operation data on the machine. The base station apparatus 2 is provided at a predetermined location such as assembly yard which is a storage place of the construction machine and the like, and receives the operation data respectively from one or more wireless terminals 1. The portable relay apparatus 3 (an example of the wireless data relay apparatus) is constituted as portable and mobile, and relays the operation data between the wireless terminal 1 and the base station apparatus 2 as necessary. The base station apparatus 2 is connected with predetermined data management means 4 such as a personal computer which accumulates the operation data, and manages the data for maintenance and the like.

The present wireless data collecting system X is characterized as follows. The base station apparatus 2 directly receives the operation data from the wireless terminal 1 when the wireless terminal 1 and the base station apparatus 2 can wirelessly communicate with each other. When the base station apparatus cannot communicate with the wireless terminal 1 due to an obstacle or the like, the base station apparatus 2 can wirelessly obtain the operation data accumulated in the portable relay apparatus 3 by moving the portable relay apparatus 3 to a location where communication with the wireless terminal 1 is possible so as to temporarily accumulate the operation data in the portable relay apparatus 3, and then moving the portable relay apparatus 3 to a location where communication with the base station apparatus 2 is possible so that the base station apparatus 2 wirelessly obtains the operation data accumulated in the portable relay apparatus 3.

Then, referring to Fig. 2, a description is provided for the constitution of individual apparatuses constituting the present wireless data collecting system X.

The wireless terminal 1 includes a data input unit 11, a wireless control unit 12 and a radio apparatus 13. The data input unit 11 receives the operation data from a predetermined sensor or the like. The wireless control unit 12 conducts communication control for wirelessly transmitting the data to the base station apparatus 2 or the portable relay station 3. The radio apparatus 13 includes a predetermined antenna to transmit and receive radio data.

The base station apparatus 2 includes a radio apparatus 21, a wireless control unit 22 and a network interface 23 (network I/F). The radio apparatus 21 includes a predetermined antenna and receives the radio data wirelessly transmitted from the wireless terminal 1 and the portable relay apparatus 3. The wireless control unit 22 conducts communication control for the data reception by the radio apparatus 21. The network interface 23 conducts communication control for transmitting the received operation data to the data management means 4 through a communication line such as LAN. The transmission to the data management system 4 may not be connected over communication in this way, but the base station apparatus 2 may be constituted integrally with the data management means 4.

The portable relay apparatus 3 includes a radio apparatus 31, a terminal communication unit 32, a data memorizing unit 33, a base station communication unit 34, a communication switching unit 35 and a battery 36. The radio apparatus 31 includes a predetermined antenna to receive and transmit the wireless data between the wireless terminal 1 and base station apparatus 2. The terminal communication unit 32 conducts processing for receiving the operation data transmitted from the wireless terminal 1. The data memorizing unit 33, such as an SRAM, temporarily memorizes the received operation data. The base station communication unit 34 conducts processing for transmitting the operation data memorized in the data memorizing unit 33 to the base station apparatus 2. The communication switching unit 35 switches between the wireless communication conducted by the terminal communication unit 32 and that by the base station communication unit 34. The battery 36 is a power supply source for the present portable relay apparatus 3. They may be constituted integrally, or may be constituted independently through cable connection. Also, a display unit showing whether the portable relay apparatus 3 is within a communication area with the base station apparatus 2 or the wireless terminal 1, for example, is included, in addition to those shown in Fig. 2.

The terminal communication unit 32 in the portable relay apparatus 3 conducts communication in a communication method (the communication frequency and the communication protocol) the same as that of the wireless control unit 22 in the base station apparatus 2. The wireless terminal 1 uses the wireless control unit 12 to communicate both with the base station apparatus 2 and the portable relay apparatus 3 in the same communication method. In the same way, the terminal communication unit 34 in the portable relay apparatus 3 conducts communication in a communication method the same as the wireless control unit 12 in the wireless terminal 1. The base station apparatus 2 uses the wireless control unit 22 to communicate both with the wireless terminal 1 and the portable relay apparatus 3 in the same communication method.

As a result, without changing the constitution of a conventional simple wireless data collecting system which is not provided with a relay apparatus, and without adding a new communication frequency or communication protocol, the present wireless data collecting system X can be constituted simply by adding the portable relay apparatus 3.

Then, referring to Fig. 3, a description is provided for communication steps in the present wireless data collecting system X.

Fig. 3 is a time chart where a direction from the top to the bottom is a time axis direction. Here, it is assumed that one base station apparatus 2, one portable relay apparatus 3, and three wireless terminals 1 (respectively referred to as a wireless terminal B, C, and D, here after) respectively exist, the terminal B is at a location where communication with the base station apparatus 2 is possible, and the terminals C and D are at locations where communication with the base station apparatus 2 is impossible due to such a reason that they are hidden behind an obstacle, for example. In the following section, S1, S2, ... mean a number indicating the steps of the communication processing.

The present wireless data collecting system X uses a radio frequency band including one fixed channel, and uses time division multiple access (TDMA) system in the band for communication. It is also possible to use a method which uses multiple radio frequency channels, and assigns individual channels to the wireless terminal 1, the base station apparatus 2, and the portable relay apparatus 3 respectively.

First, in S1, the base station apparatus 2 transmits beacon which is a signal for synchronizing the communication. The wireless terminal B receives the beacon and returns a terminal ID "B", which is identification information of this apparatus, after a random wait time. As a result of returning the terminal ID, the base station apparatus 2 can identify the wireless terminal existing in the communication area. The wait time is used for shifting the response timing for each of the wireless terminals 1 so as to make overlapping of the reception timings on the base station apparatus 2 as few as possible when the multiple wireless terminals 1 have received the beacon. The wait time realized by generating a random number from 10 to 100, for example, and converting the random number into time so as to transmit the terminal ID.

Then, in S2, the base station apparatus 2 receives the terminal ID from the terminal apparatus B, and one selected from the received terminal ID's is transmitted as a data transmission grant signal. As the method for selecting one from the multiple terminal ID's, different methods may be conceivable such as the order of arrival or the order from the oldest reception record in the past. Here, since the terminal ID is returned only from the terminal apparatus B, the terminal ID "B" is transmitted. Further, the wireless terminal B receives the terminal ID, and determines that transmission of data is permitted if the terminal ID agrees with that of itself, and transmits the operation data. Then, the base station apparatus 2 receives the operation data. It is assumed that the received operation data is transmitted to and accumulated at the data management means 4, and the same procedure is repeated from this point. Further, when the base station apparatus 2 has received other terminal ID's, the operation data are collected from the respective wireless terminals 1 by transmitting these terminal ID's, and receiving transmitted operation data sequentially. S1 and S2 in Fig. 3 show an example where a response is received only from the wireless terminal B. The description up to here is one cycle for receiving the operation data from the one wireless terminal 2, and the operation data is collected from the wireless terminal 2, which responds to the beacon each time the beacon is transmitted. The base station 2 is constituted so as to transmit new beacon after the reception of the operation data from the wireless terminal 2 is conformed, or after a predetermined time out period has elapsed.

In the following section, steps for collecting data from the wireless terminals C and D located outside the communication area of the base station apparatus 2 using the portable relay apparatus 3. Here, the portable relay apparatus 3 is set by the communication switching unit 35 such that the communication by the base station communication unit 34 (communication with the base station apparatus 2) is conducted as an initial state. Also, the terminal ID "A" is set in the portable relay apparatus 3 for discriminating it from the other wireless terminals.

First, in S3, when a person carrying the portable relay apparatus 3 travels into the communication area with the base station 2, the portable relay apparatus 3 receives the beacon transmitted from the base station apparatus 2, and simultaneously, transmits the terminal ID "A" of itself after the random wait time. As a result, the base station apparatus 2 recognizes that a virtual wireless terminal A exists in the communication area.

Then, in S4, the base station apparatus 2 which has received the terminal ID "A" transmits the terminal ID "A" as a data transmission grant signal, and enters a state of waiting for the operation data from the virtual wireless terminal A (namely portable relay apparatus 3). On the other hand, the portable relay apparatus 3 which has received the terminal ID "A" is switched by the communication switching unit 35 such that the communication by the terminal communication unit 32 (communication with the wireless terminal 1) is conducted. As a result, the portable relay apparatus 3 acts as the base station apparatus 2 to conduct communication action against the wireless terminals C and D from this point.

Namely, in S5, the portable relay apparatus 3 transmits the beacon for waiting for a response from the wireless terminal 1 while the person carrying the portable relay apparatus 3 is traveling into the communication area with the wireless terminals C and D. At this time, if either one of the wireless terminals 1 does not respond, it transmits the beacon again (not shown). Then, the portable relay apparatus 3 enters into the communication area with the wireless terminals C and D, the wireless terminals C and D which receive the beacon respectively transmit the terminal ID's of their apparatuses after the random wait time, and the portable relay apparatus 3 receives them.

Then, in S6, the portable relay apparatus transmits one selected from the received terminal ID's as the transmission grant signal, and the wireless terminal 1 corresponding to it transmits the operation data. Further, the portable relay apparatus 3 which receives the operation data temporarily memorizes the received operation data along with the terminal ID in the data memorizing unit 33. S6 in Fig. 3 shows that first the terminal ID "D" of the wireless terminal D is transmitted, and the operation data from the wireless terminal D is temporarily memorized.

Then, in S7, communication similar to that in S6 is conducted between the remaining wireless terminal C and the portable relay apparatus 3.

The portable relay apparatus 3 which has received the operation data from all of the wireless terminals C and D from which the response is received. Then, in S8, the portable relay apparatus 3 is switched by the communication switching unit 35 such that the communication by the base station communication unit 34 (communication with the base station apparatus 2) is conducted. As a result, the portable relay apparatus 3 continues the communication action following S4 as the virtual wireless terminal A. Namely, the operation data of the virtual wireless terminal A is transmitted to the base station apparatus 2. Since the virtual wireless terminal A is not mounted on a machine, it transmits blank data as the operation data.

Then, in S9, the beacon and the terminal ID are transmitted/received between the base station apparatus 2 and the wireless terminal 1 (including the virtual wireless terminal A) as in S1 described above. For convenience, S9 in Fig. 3 shows a case where only the virtual terminal A (namely the portable relay apparatus 3) responds. At this time, when operation data exist in the data memorizing unit 33, the portable relay apparatus 3 transmits one of the terminal ID's ("C" in the example in Fig. 3) corresponding to the operation data. As a result, the portable relay apparatus 3 virtually acts as the wireless terminal C.

Then, in S10, as in S2 described above, since the base station apparatus 2 grants the wireless terminal C the data transmission, the portable relay apparatus 3 acting as the wireless terminal C transmits the operation data corresponding to the terminal ID "C" memorized in the data memorizing unit 33 to the base station apparatus 2. The operation data which have been transmitted is deleted from the data memorizing unit 33.

Further, in S11 and S12, as in S9 and S10 described above, the portable relay apparatus 3 acts as the wireless terminal D, and the operation data of the wireless terminal D memorized in the data memorizing unit 33 are transmitted to the base station apparatus 2.

In this way, the portable relay apparatus 3 acts as the base station apparatus 2 to receive and temporarily memorize the operation data from the wireless terminal 1 out of the communication area of the base station apparatus 2, and then, acts as the wireless terminal 1 to transmits the temporarily memorized operation data to the base station apparatus 2.

With this constitution, since the communication method (the radio frequency band and the communication protocol) used in the direct communication between the wireless terminal 1 and the base station apparatus 2 can be used for the relay through the portable relay apparatus 3, it is not necessary to use multiple wireless communication bands and the communication protocols. Further, the travel of the portable relay apparatus 3 can relay the data communication even when the travel extent of the wireless terminal 1 is not determined.

While the portable relay apparatus 3 in the wireless data collecting system X automatically switches between the wireless communication conducted by the terminal communication unit 32 and that by the base station communication unit 34 according to the communication state, the switching may be conducted manually. With this portable relay apparatus 3, for example, such an application that when operation data on a construction machine or the like operating in a construction site for a long period are collected, after the operation data for one day or several days as a unit are accumulated in the portable relay apparatus 3, the accumulated operation data are transmitted to the base station apparatus 2 can be conceivable.

While the portable relay apparatus 3 can be easily carried, it is not limited to this, and may have any transportable constitution such as onboard type and wheeled type.

When the wireless terminal 1 and the base station apparatus 2 cannot directly communicate with each other, for example, due to a problem such as a predetermined obstacle and the communication distance, if a fixed relay apparatus having the function of the portable relay apparatus 3 is provided as a relay station, the data can be relayed without using multiple wireless communication bands or communication protocols. In this case, when the radio apparatuses 31 are provided for the wireless terminal 1 and the base station apparatus 2 respectively, for example, such a constitution that communication with the wireless terminal 1 and the base station apparatus 2 are respectively conducted in parallel without switching by the communication switching unit 35 may be conceivable. This constitution is an embodied example of the present invention.

## Claims

1. A wireless data collecting system comprising:
a wireless data terminal for wirelessly transmitting predetermined data;
a base station apparatus for receiving the predetermined data wirelessly transmitted from said wireless terminal; and
a wireless data relay apparatus,
said wireless data relay apparatus comprising:
terminal communication means for receiving said data transmitted from said wireless terminal in a communication method which is the same as that of said base station apparatus;
data memorizing means for memorizing the data received by said terminal communication means; and
base station communication means for transmitting the memorized data in said data memorizing means to said base station apparatus in a communication method which is the same as that of said wireless terminal.

2. The wireless data collecting system according to claim 1, said wireless data relay apparatus further comprising communication switching means for switching between a wireless communication conducted by said terminal communication means and that by said base station communication means.

3. The wireless data collecting system according to claim 1, wherein said wireless data relay apparatus further comprises an antenna and a battery.

4. A wireless data relay apparatus for receiving predetermined data from a wireless terminal for wirelessly transmitting the predetermined data, and transmitting the received data to a predetermined base station apparatus, said wireless data relay apparatus comprising:
terminal communication means for receiving the data transmitted from said wireless terminal;
data memorizing means for memorizing the data received by said terminal communication means; and
base station communication means for wirelessly transmitting the memorized data in said data memorizing means to said base station apparatus.

5. The wireless data relay apparatus according to claim 4, further comprising communication switching means for switching between a wireless communication conducted by said terminal communication means and that by said base station communication means.

6. A wireless data relay apparatus for communicating with a wireless terminal and a base station apparatus, said wireless data relay apparatus comprising:
terminal communication means for receiving predetermined data transmitted from said wireless terminal in the same communication method as said base station apparatus;
data memorizing means for memorizing the data received by said terminal communication means; and
base station communication means for wirelessly transmitting the memorized data in said data memorizing means to said base station apparatus in the same communication method as said wireless terminal.

7. The wireless data relay apparatus according to claim 6, further comprising communication switching means for switching a wireless communication with said wireless data relay apparatus between said terminal communication means and that by said base station communication means.

8. The wireless data relay apparatus according to claim 6, further comprising an antenna and a battery.
